# EUROPEAN PATENT SPECIFICATION

(11) **EP 2 886 442 B1**
(45) Date of publication and mention of the grant of the patent: **10.10.2018**
(21) Application number: 13852619.9
(22) Date of filing: 11.07.2013
(51) Int. Cl.: B63H 21/20, B63H 21/14, B63H 21/17, B63J 3/02, F01N 5/04, F01N 5/02, F02B 37/18

(54) **SHIP PROPULSION DEVICE, SHIP, AND SHIP PROPULSION METHOD**
SCHIFFSANTRIEBSVORRICHTUNG, SCHIFF UND SCHIFFSANTRIEBSVERFAHREN
DISPOSITIF DE PROPULSION DE NAVIRE, NAVIRE ET PROCÉDÉ DE PROPULSION DE NAVIRE

(30) Priority: 09.11.2012 JP 2012247324
(43) Date of publication of application: 24.06.2015
(73) Proprietor: Mitsubishi Heavy Industries, Ltd., Tokyo 108-8215 (JP)
(72) Inventor: ICHIKI, Yoshihiro, Tokyo 108-8215 (JP)
(74) Representative: Hoffmann Eitle
(86) International application number: PCT/JP2013/069059
(87) International publication number: WO 2014/073243

(56) References cited:
- EP-A1- 2 371 703
- EP-A1- 2 484 873
- EP-A1- 2 508 418
- WO-A1-2012/039063
- JP-A- 2011 020 579
- JP-A- 2011 020 579
- JP-A- 2011 116 152

## Description

### Technical Field

The present invention relates to a ship propulsion device, a ship, and a ship propulsion method.

### Background Art

Ships in which a gas turbine is driven by exhaust gas from a main engine, and steam is generated with exhaust gas by an economizer to drive the steam turbine to generate electric power to compensate for a required inboard power amount have been developed for a long time.

Additionally, a technique regarding a shaft generator motor, which obtains the surplus power amount of a ship where power is generated and assists a main engine, is disclosed in PTLs 1 and 2.

Particularly, PTL 1 discloses a ship including a gas turbine control unit that computes, as a feed-forward opening degree, the opening degree of a gas turbine control valve that controls the flow rate of exhaust gas from a main engine, which is supplied to a gas turbine, on the basis of a required inboard power amount and the load of a main engine, and a fuel injection amount control unit that computes the fuel injection amount of the main engine equivalent to the output at the time of the motor operation of a shaft generator motor, as a converted fuel injection amount, and subtracts the converted fuel injection amount from the fuel injection amount supplied to the main engine.
Further, PTL 3 teaches a propulsion device for a vessel of a hybrid type counter rotating system, wherein counter rotating propellers constituted by a first propeller driven by a main machine and a second propeller driven by an electric motor are provided.
Further, PTL 4 teaches a power turbine control unit calculating on the basis of inboard required power and a load on a main engine a degree-of-opening of a power-turbine control valve that controls a flow volume of the exhaust gas to be supplied to a power turbine from the main engine as a feedforward degree-of-opening and outputs the feedforward degree-of-opening to a power turbine control valve.
Moreover, PTL 5 teaches a ship powered by an internal combustion engine and an electric motor connected to a propeller powered by surplus electric power obtained by a thermal discharge recovery system.
Moreover, PTL 6 relates to a steam turbine, wherein the output of the stream turbine available from a present operating state of a diesel engine is acquired in advance as a stream-turbine available output, the output of the steam turbine is determined so as to approximate the steam turbine available output by making the output of the steam turbine equal to the difference between the energy demand, power turbine minimum output and diesel engine generator minimum output.

### Citation List

### Patent Literature

[PTL 1] JP 2011-116152
[PTL 2] JP 2010-222001
[PTL 3] JP 2011-020579 A
[PTL 4] EP 2 508 418 A1
[PTL 5] EP 2 371 703 A1
[PTL 6] EP 2 484 873 A1

### Summary of Invention

### Technical Problem

In the ship described in PTL 1, the opening degree of the gas turbine control valve is controlled in a feed-forward mann er on the basis of the required inboard power amount. Thus, the surplus inboard power amount can be reduced as much as pos sible. Additionally, when inboard electric power decreases steeply and a relatively large surplus power amount is generated, assisting of a shaft by the shaft generator motor can be performed, and the fuel injection amount of the main engine equivalent to the output at the time of the operation of the shaft generator motor can be reduced so that a target number of propeller rotations can be obtained, and fuel consumption can be improved.

However, in the ship described in PTL 1, the control of controlling the opening degree of the gas turbine control valve in a feed-forward manner, and of performing assisting of the shaft by the shaft generator motor and reducing the fuel injection amount of the main engine when a surplus power amount is generated is complicated. Additionally, PTL 1 particularly makes no mention of the magnitude of the required inboard power amount and the capacity of the shaft generator motor.

The invention has been made in view of such a situation, and an object thereof is to provide a ship propulsion device, a ship, and a ship propulsion method which can further enhance the energy efficiency of the ship through simple control.

### Solution to Problem

In order to solve the above problems, the ship propulsion device, the ship, and the ship propulsion method of the invention adopt the following means.

That is, the ship propulsion device related to a first aspect of the invention is the ship propulsion device of claim 1. This ship propulsion device in particular includes a main engine that is provided with a turbocharger and drives a propulsion propeller of a ship drive; a gas turbine that is driven by exhaust gas from the main engine; a turbine generator that is driven by the gas turbine; and a power-assist motor that assists propulsion of the ship. The power-assist motor is driven using a surplus power amount that is the difference between the amount of power generated by the turbine generator and the amount of power required by the ship equipment, and the bleed exhaust gas flow of exhaust gas to the gas turbine is reduced when the power consumption amount of the power-assist motor arrives at a preset power amount and the amount of generated power exceeds the total of the power consumption amount and the required power amount.

The ship propulsion device of the present configuration in cludes the main engine that is provided
with the turbocharger and drives the propulsion propeller of the ship drive; the gas turbine that is driven by exhaust gas from the main engine; the turbine generator that is driven by the gas turbine; and the power-assist motor that assists the propulsion of the ship.

The ship propulsion device gives top priority to the supply of electric power to the ship equipment, and drives the power-assist motor depending on the surplus power. For this reason, although all of the surplus power amount is consumed by the power-assist motor, if the power consumption of the ship equipment decreases and the surplus power amount exceeds the maximum power consumption amount of the power-assist motor, the amount of generated power of the turbine generator is left without being consumed.

Also, the bleed exhaust gas flow of the exhaust gas to the gas turbine is reduced when the power consumption amount of the power-assist motor arrives at the preset power amount, and the total of the power consumption amount and the required inboard power amount exceeds the amount of generated power. The preset power amount is, for example, the maximum power consumption amount of the power-assist motor.

In this way, the bleed exhaust gas flow of the exhaust gas to the gas turbine is reduced. Accordingly, generation of surplus generated power that is not also used for the ship equipment and the power-assist motor can be prevented, and more exhaust gas from the main engine is fed to the turbocharger. Thus, the fuel consumption of the main engine can be improved. Additionally, with respect to the ship in which the required inboard power amount is small, a power-assist motor having a small maximum power consumption amount is used as the power-assist motor, so that surplus power can be used for the power-assist motor and the surplus power can be absorbed by the power-assist motor. When the surplus power is further generated even if the power-assist motor absorbs the surplus power, an operation control can be easily performed by reducing the displacement to the gas turbine and controlling only an improvement in the scavenging pressure of the main engine.

Moreover, the present control is a simple control because the total power amount and the amount of generated power that are consumed by the ship are compared with each other, and the bleed exhaust gas flow of the exhaust gas to the gas turbine is controlled.

Therefore, the present configuration can further enhance the energy efficiency of the ship through simple control.

In the first aspect, it is preferable that the bleed exhaust gas flow of exhaust gas to the gas turbine is reduced so that, when the amount of generated power exceeds the total of the maximum power consumption amount of the power-assist motor and the required inboard power amount, the total and the amount of generated power become equal to each other.

According to this configuration, a surplus is not generated in the amount of generated power by making the total of the maximum power consumption amount of the power-assist motor and the required inboard power amount of the ship equipment equal to the amount of generated power of the turbine generator. Thus, the energy efficiency of the ship can be further enhanced.

Additionally, a ship related to a second aspect of the invention includes the above-described ship propulsion device.

Additionally, a ship propulsion method related to a third aspect of the invention includes a process of driving a propulsion propeller through driving of a main engine; a process of driving a gas turbine with exhaust gas from the main engine to generate power; and a process of assisting propulsion of the ship. The propulsion of the ship is assisted depending on a surplus power amount that is the difference between an amount of generated power and an required inboard power amount, and the bleed exhaust gas flow of exhaust gas to the gas turbine is reduced when the amount of power consumed by the assisting arrives at a predetermined power amount and the amount of generated power exceeds the total of the power consumption amount and the required inboard power amount.

### Advantageous Effects of Invention

According to the invention, there is provided an outstanding effect that the energy efficiency of the ship can be further enhanced through simple control.

### Brief Description of Drawings

Fig. 1 is a configuration view of a ship propulsion device related to an embodiment of the invention.
Fig. 2 is a block diagram illustrating an electrical configuration of a valve opening degree control device of a gas turbine control valve related to the embodiment of the invention.
Fig. 3 is a graph illustrating an example of the amount of power generated by a turbine generator and its consumption state, related to the embodiment of the invention.

### Description of Embodiments

Hereinafter, a ship propulsion device, a ship, and a ship propulsion method of an embodiment related to the invention will be described with reference to the drawings.

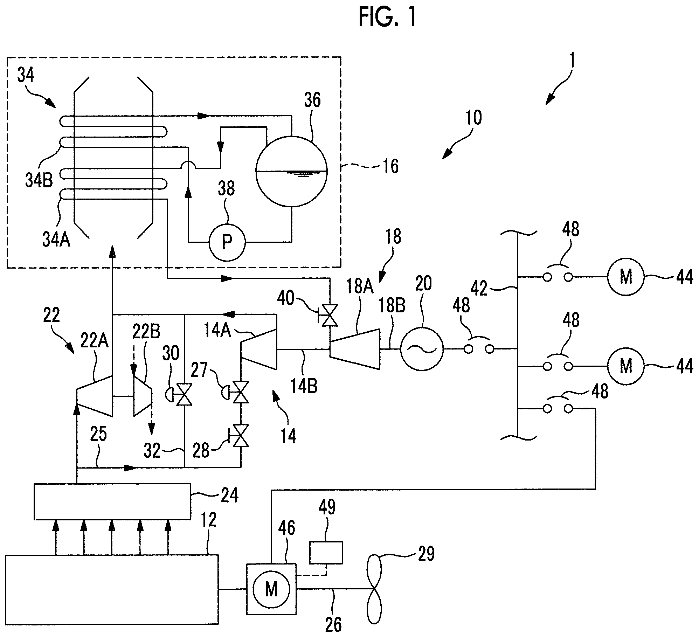

Fig. 1 illustrates a schematic configuration of a ship propulsion device 10 provided in a ship 1.

The ship propulsion device 10 includes a main engine 12, a gas turbine 14, a steam generator 16, a steam turbine 18, and a turbine generator 20.

The main engine 12 is a diesel engine, and is provided with a turbocharger 22 and an exhaust gas manifold 24. The main engine 12 is directly connected to one end of a propeller shaft 26, and rotationally drives the propeller shaft 26. A propulsion propeller 29 of the ship 1 is fixed to the other end of the propeller shaft 26.

The turbocharger 22 includes a turbine 22A and a compressor 22B that are coaxially provided. The turbine 22A is rotationally driven by the exhaust gas discharged from the main engine 12 being guided thereto via the exhaust gas manifold 24. If the turbine 22A is driven, the compressor 22B, which is coaxially provided, is rotated to compress air. The compressed air is supplied to the main engine 12.

An exhaust gas branch pipe 25 is branched from between the exhaust gas manifold 24 and the turbine 22A, and is connected to a gas turbine 14. Meanwhile, an exhaust gas outlet side of the turbine 22A is connected to the steam generator 16.

The gas turbine 14 includes a turbine 14A and a shaft 14B. The turbine 14A is rotationally driven by the high-temperature exhaust gas exhausted from the main engine 12, and rotates the shaft 14B connected to the turbine 14A. An exhaust gas outlet side of the turbine 14A joins the exhaust gas outlet side of the turbine 22A provided in the turbocharger 22, and is connected to the steam generator 16.

Additionally, the exhaust gas branch pipe 25 is provided with a gas turbine main stop valve 27 and a gas turbine control valve 28. The gas turbine main stop valve 27 interrupts the exhaust gas to be supplied from the main engine 12 to the gas turbine 14, its control excluding opening and closing is unnecessary, and the gas turbine main stop valve is normally fully opened. The gas turbine control valve 28 controls a bleed exhaust gas flow to the gas turbine 14 of the exhaust gas, and is fully opened unless the scavenging pressure of the main engine 12 falls more than needed.

Moreover, the exhaust gas branch pipe 25 and the exhaust gas outlet side of the turbine 14A are bypassed by a bypass pipe 32 including an exhaust gas bypass valve 30. Even if the gas turbine control valve 28 is fully opened, the exhaust gas bypass valve 30 is opened when there is a margin in the scavenging pressure. As a result, the amount of vaporization of water in the steam generator 16 to be described below increases, and the amount of generated power generated by the steam turbine 18 increases.

The steam generator 16 includes an exhaust gas economizer 34 and a steam separator 36.

The exhaust gas economizer 34 includes a superheater 34A and an evaporator 34B within a flue thereof. The superheater 34A and the evaporator 34B are installed in parallel in order from the bottom toward the top inside the exhaust gas economizer 34. The high-temperature exhaust gas flows within the flue of the exhaust gas economizer 34, and is discharged to the atmospheric air via a chimney (not illustrated). Steam is guided from an upper portion of the steam separator 36 to the superheater 34A. Water is guided from a lower portion of the steam separator 36 to the evaporator 34B.

Within the steam separator 36, the steam is separated and stored in the upper portion and the water is separated and stored in the lower portion. The water within the steam separator 36 is guided to the evaporator 34B within the exhaust gas economizer 34 by a boiler water circulating pump 38. Steam containing the moisture from the evaporator 34B of the exhaust gas economizer 34 is guided to the steam separator 36, and is separated into water and steam. The separated steam is guided to the superheater 34A within the exhaust gas economizer 34.

The steam turbine 18 includes a turbine 18A and a shaft 18B. The turbine 18A is rotationally driven by the steam supplied from the steam generator 16, and rotates the shaft 18B connected to the turbine 18A. A steam turbine control valve 40 is provided between the exhaust gas economizer 34 and the steam turbine 18, and the steam turbine control valve 40 is controlled so that the pressure of the steam supplied to the steam turbine 18 becomes constant.

The turbine generator 20 is installed coaxially with the shaft 14B provided in the gas turbine 14 and the shaft 18B provided in the steam turbine 18, and is driven by the gas turbine 14 and the steam turbine 18 to generate electric power. The power generated by the turbine generator 20 is connected via a power line 42 to an inboard system, is supplied to various kinds of ship equipment 44 or a power-assist motor 46, and is used for driving of the ship equipment 44 or the power-assist motor 46.

In addition, although a configuration in which the gas turbine 14 and the steam turbine 18 are coaxially installed is adopted in the present embodiment, the invention is not limited to this, and a configuration in which the gas turbine 14 and the steam turbine 18 are connected in parallel and power is generated by the driving of each thereof may be adopted.

The power-assist motor 46 is provided between the main engine 12 and the propulsion propeller 29, and assists the main engine 12. In addition, the power consumption amount of the power-assist motor 46 is detected by a power amount detection part 49.

In addition, the power line 42 that supplies electric power to the ship equipment 44 and the power-assist motor 46 is appropriately provided with a breaker 48 for stopping supply of electric power.

Moreover, the ship 1 of the present embodiment includes a diesel engine for power generation (not illustrated) as an auxiliary generator, and the generated power thereof is also connected via the power line 42 to the inboard system.

In addition, the electric power required for each piece of ship equipment 44 (hereinafter referred to as an "required inboard power amount") is computed by a control unit (not illustrated) (hereinafter referred to as a power management system ("PMS")) from a current value and a voltage value that are obtained from an ammeter and a voltmeter that are connected to the inboard system.

Here, since the power consumption amount of the ship equipment 44 is large, for example, when the ship 1 is a large-sized container ship which is loaded with refrigerated containers, all of the amount of power generated by the turbine generator 20 can be consumed. However, in the ship 1, such as an oil tanker or a bulk carrier, in which the power consumption amount of the ship equipment 44 is not large, all of the amount of power generated by the turbine generator 20 may be unable to be consumed, for example, even if the power-assist motor 46 is provided.

Thus, the ship propulsion device 10 related to the present embodiment drives the power-assist motor 46 depending on a surplus power amount that is the difference between the amount of generated power and the required inboard power amount of the ship equipment 44 by the turbine generator 20. Also, the ship propulsion device 10 reduces the bleed exhaust gas flow of the exhaust gas to the gas turbine 14 when the power consumption amount of the power-assist motor 46 arrives at a preset power amount (hereinafter referred to a "set power amount"), and the total (hereinafter referred to as a "total power amount") of the power consumption amount and the required inboard power amount exceeds the amount of generated power. In addition, although the set power amount is, for example, a maximum power amount (hereinafter a "maximum power consumption amount") that can be consumed by the power-assist motor 46, the invention is not limited to this, and the set power amount may be a power amount lower than the maximum power consumption amount.

Additionally, with respect to the ship 1 in which the required inboard power amount is small, a power-assist motor having a small maximum power consumption amount is used as the power-assist motor 46, so that surplus power can be used for the power-assist motor 46 and the surplus power can be absorbed by the power-assist motor 46. When the surplus power is further generated even if the power-assist motor 46 absorbs the surplus power, an operation control can be easily performed by reducing the displacement to the gas turbine 14 and controlling only an improvement in the scavenging pressure of the main engine 12.

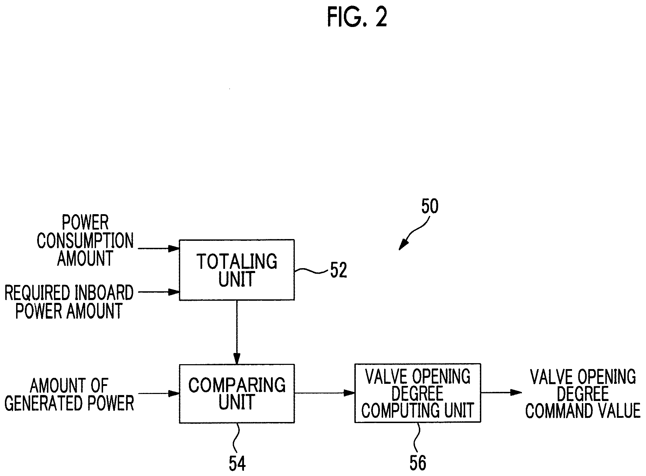

Fig. 2 is a block diagram illustrating an electrical configuration of a valve opening degree control device 50 of the gas turbine control valve 28 related to the present embodiment. In addition, the valve opening degree control device 50 is constituted of, for example, a central processing unit (CPU), a random access memory (RAM), a computer-readable recording medium, and the like. Also, a series of processing for realizing various functions is recorded on a recording medium or the like in the form of a program as an example, and the various functions are realized as the CPU reads out this program to the RAM or the like and executes processing or computation processing of information.

The valve opening degree control device 50 includes a totaling unit 52, a comparing unit 54, and a valve opening degree computing unit 56, and controls the valve opening degree of the gas turbine control valve 28.

The totaling unit 52 calculates a total power amount that is the sum of the power consumption amount of the power-assist motor 46 detected by the power amount detection part 49 and the required inboard power amount of the ship equipment 44, and outputs the total power amount to the comparing unit 54. In addition, the power-assist motor 46 is controlled so that power consumption amount does not exceed the set power amount. Additionally, the required inboard power amount of the ship equipment 44 is output from the PMS.

The comparing unit 54 compares the input total power amount and the amount of generated power of the turbine generator 20, and outputs a comparison result to the valve opening degree computing unit 56.

The valve opening degree computing unit 56 computes a valve opening degree command value on the basis of the comparison result obtained by the comparing unit 54, and outputs the valve opening degree command value to the gas turbine control valve 28.

When the comparison result shows that the total power amount exceeds the amount of generated power, the valve opening degree computing unit 56 outputs a valve opening degree command value that makes the gas turbine control valve 28 fully open.

On the other hand, when the comparison result shows that the power consumption amount of the power-assist motor 46 arrives at the set power amount and the amount of generated power exceeds the total power amount, the valve opening degree computing unit 56 outputs a valve opening degree command value in a direction in which the gas turbine control valve 28 is closed. In this case, the valve opening degree computing unit 56, for example, may calculate a valve opening degree command value through PI control on the basis of the difference between the amount of generated power and the total power amount, or may store table information showing the relationship between the difference between the amount of generated power and the total power amount and the valve opening degree in advance, and calculate a valve opening degree command value according to the difference, on the basis of this table information.

In addition, it is preferable that the valve opening degree computing unit 56 calculates a valve opening degree command value at which the total power amount and the amount of generated power become equal to each other.

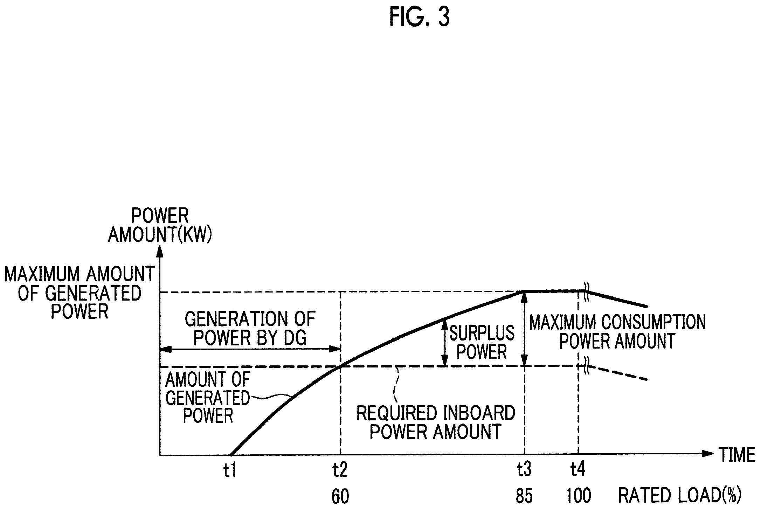

Fig. 3 is a view illustrating an example of the amount of power generated by the turbine generator 20 and its consumption state.

As illustrated in Fig. 3, since power generation performed by the turbine generator 20 is started at a time t1, and the amount of power generated by the turbine generator 20 is smaller than the required inboard power amount until a time t2, a diesel engine for power generation also generates power. In addition, at the time t2, a rated load that is the load of the main engine 12 is 60%, and the rated load rises with time. In addition, the rated load is a value obtained by subtracting the output of a shaft generator motor (SGM) from an engine load (shaft output).

Since the amount of generated power of the turbine generator 20 increases with a rise in the rated load, the difference between the amount of generated power and the required inboard power amount becomes the surplus power amount, and all of the surplus power amount is supplied to the power-assist motor 46. In the example of Fig. 3, surplus power is generated at the time t2 when the rated load becomes 60%, and assisting of the main engine 12 by the power-assist motor 46 is started.

In this way, the ship propulsion device 10 gives top priority to the supply of electric power to the ship equipment 44, and drives the power-assist motor 46 with the surplus power.

In addition, since the number of rotations of a propeller of the main engine 12 is controlled so as to become constant, when the actual number of rotations of the propulsion propeller 29 rises higher than a set number of rotations by virtue of the power-assist motor 46, a fuel valve of the main engine 12 is controlled so that the number of rotations of a throttle propeller becomes the set number of rotations.

Also, in the example of Fig. 3, since the required inboard power amount is constant, the rated load rises and the surplus power amount increases. If a time t3 is reached, that is, the rated load arrives at 85%, the surplus power amount arrives at the maximum power consumption amount set by the set power amount of the power-assist motor 46, and the power-assist motor 46 assists the main engine 12 with the maximum power consumption amount.

Hence, since the operation of absorbing the surplus power using the power-assist motor 46 while the rated load with respect to the required inboard power amount is between 60% to 85%, and the timing at which the power-assist motor 46 is started for efficient operation is settled, the starting control of the power-assist motor 46 can be made easy.

For example, when the maximum amount of generated power of the turbine generator 20 is 1400 kW while the maximum required inboard power amount is 700 kW, the maximum power consumption amount of the power-assist motor 46 can be 700 kW that is the difference between both the amounts. Additionally, by using the power-assist motor 46 with a smaller maximum power consumption amount or by setting the set power amount to be smaller than the maximum power consumption amount, it is also possible to further suppress the maximum power consumption amount of the power-assist motor 46.

Also, if the rated load rises further, the surplus power amount exceeds the maximum power consumption amount of the power-assist motor 46, that is, the amount of generated power exceeds the total power amount. In this case, since the valve opening degree control device 50 controls the gas turbine control valve 28 in a direction in which the valve opening degree of the gas turbine control valve 28 is closed, the bleed exhaust gas flow of the exhaust gas to the gas turbine 14 is reduced, and even if the rated load rises further (from a rated load of 85% at the time t3 to a rated load of 100%), the amount of generated power and the total power amount of the turbine generator 20 become equal to each other.

On the other hand, if the rated load is 100% and the required inboard power amount decreases like after a time t4, the maximum power consumption amount of the power-assist motor 46 is constant. Thus, in order to make the amount of generated power and the total power amount equal to each other, the gas turbine control valve 28 is controlled in the direction in which the valve opening degree thereof is further closed, and the amount of generated power decreases.

In this way, when the amount of generated power exceeds the total power amount, the bleed exhaust gas flow of the exhaust gas to the gas turbine 14 is reduced. Accordingly, generation of surplus generated power that is not also used for the ship equipment 44 and the power-assist motor 46 can be prevented, and more exhaust gas from the main engine 12 is fed to the turbocharger 22 provided in the main engine 12. Thus, the fuel consumption of the main engine 12 can be improved.

Additionally, with respect to the ship 1 in which the required inboard power amount is small, a motor having a small maximum power consumption amount is used as the power-assist motor 46, so that the surplus power to be used for the power-assist motor 46 can be made smaller.

Additionally, the control related to the present embodiment is a simple control because the total power amount and the amount of generated power that are consumed by the ship 1 are compared with each other, and the bleed exhaust gas flow of the exhaust gas to the gas turbine 14 is controlled.

Moreover, in the present embodiment, a surplus is not generated in the amount of generated power by making the total of the power consumption amount of the power-assist motor 46 and the required power amount of the ship equipment 44 equal to the amount of generated power of the turbine generator 20. Thus, the energy efficiency of the ship 1 can be further enhanced.

As described above, in the ship propulsion device 10 related to the first embodiment, the power-assist motor 46 is driven depending on the surplus power amount that is the difference between the amount of power generated by the turbine generator 20 and the required power amount of the ship equipment 44, and when the amount of generated power exceeds the total of the power consumption amount of the power-assist motor 46 and the required power amount of the ship equipment 44, the bleed exhaust gas flow of the exhaust gas to the gas turbine 14 is reduced.

Therefore, the ship propulsion device 10 related to the present embodiment can further enhance the energy efficiency of the ship 1 through the simple control.

Although the invention has been described above using the above embodiment, the technical scope of the invention is not limited to the scope described in the above embodiment. Various changes or improvements can be added to the above embodiment without departing from the concept of the invention, and forms to which these changes or improvements are added are also included in the technical scope of the invention.

### Reference Signs List

1: SHIP
10: SHIP PROPULSION DEVICE
12: MAIN ENGINE
14: GAS TURBINE
18: STEAM TURBINE
20: TURBINE GENERATOR
22: TURBOCHARGER
29: PROPULSION PROPELLER
44: SHIP EQUIPMENT
46: POWER-ASSIST MOTOR

## Claims

1. A ship propulsion device (10) comprising:
a main engine (12) that is provided with a turbocharger (22) and configured to drive a propulsion propeller (29) of a ship (1);
a gas turbine (14) that is configured to be driven by exhaust gas from the main engine (12);
a turbine generator (20) that is configured to be driven by the gas turbine (14); and
a power-assist motor (46) that is configured to assist propulsion of the ship and is configured to be driven depending on a surplus power amount that is the difference between the amount of power generated by the turbine generator (20) and the amount of power required by ship equipment (44),
a gas turbine control valve (28) that is configured to control a bleed exhaust gas flow to the gas turbine (14) of the exhaust gas from the main engine and to be fully opened unless the scavenging pressure of the main engine (12) falls more than needed; and
a valve opening degree control device (50) that is configured to control a valve opening degree of the gas turbine control valve (28), the valve opening degree control device (50) including a totaling unit (52), a comparing unit (54), and a valve opening degree computing unit (56),
wherein the valve opening degree control device (50) is configured to reduce said bleed exhaust gas flow of exhaust gas to the gas turbine (14) by controlling the gas turbine control valve (28) in a direction in which the valve opening degree of the gas turbine control valve (28) is closed, when the power consumption amount of the power-assist motor (46) arrives at a preset power amount and the amount of said generated power exceeds the total of said power consumption amount of the power-assist motor (46) and said required power amount of the ship equipment.

2. The ship propulsion device according to Claim 1,
wherein the valve opening degree control device (50) is configured to reduce the bleed exhaust gas flow of exhaust gas to the gas turbine (14) so that, when the amount of generated power exceeds the total of the power consumption amount of the power-assist motor (46) and the required power amount, the total and the amount of generated power become equal to each other.

3. A ship (1) comprising the ship propulsion device (10) according to Claim 1 or 2.

4. A ship propulsion method for carrying out a process by using the ship propulsion device of any of claims 1 and 2, the method comprising:
a process of driving a propulsion propeller through driving of a main engine (12);
a process of driving a gas turbine (14) with exhaust gas from the main engine to generate power; and
a process of assisting propulsion of the ship (1),
wherein the propulsion of the ship is assisted depending on a surplus power amount that is the difference between an amount of generated power and an required inboard power amount, and the bleed exhaust gas flow of exhaust gas to the gas turbine (14) is reduced when the amount of power consumed by the assisting arrives at a predetermined power amount and the amount of generated power exceeds the total of the power consumption amount and the required inboard power amount.

## Patentansprüche

1. Schiffsantriebsvorrichtung (10), umfassend:
einen Hauptmotor (12), der mit einem Turbolader (22) versehen ist und zum Antreiben einer Antriebsschraube (29) eines Schiffs (1) konfiguriert ist;
eine Gasturbine (14), die dazu konfiguriert ist, durch Abgas von dem Hauptmotor (12) angetrieben zu werden;
einen Turbinengenerator (20), der dazu konfiguriert ist, von der Gasturbine (14) angetrieben zu werden; und
einen Servomotor (46), der zum Unterstützen des Antriebs des Schiffs konfiguriert ist und dazu konfiguriert ist, abhängig von einer überschüssigen Leistungsmenge angetrieben zu werden, welche die Differenz zwischen der Leistungsmenge, die durch den Turbinengenerator (20) erzeugt wird, und der Leistungsmenge ist, die durch Schiffsausrüstung (44) erforderlich ist,
ein Gasturbinensteuerventil (28), das dazu konfiguriert ist, eine Ablassabgasströmung zur Gasturbine (14) des Abgases von dem Hauptmotor zu steuern und vollständig geöffnet zu sein, falls der Spüldruck des Hauptmotors (12) nicht mehr als erforderlich abfällt; und
eine Ventilöffnungsgradsteuervorrichtung (50), die zum Steuern eines Ventilöffnungsgrads des Gasturbinensteuerventils (28) konfiguriert ist, wobei die Ventilöffnungsgradsteuervorrichtung (50) eine Summierungseinheit (52), eine Vergleichseinheit (54) und eine Ventilöffnungsgrad-Berechnungseinheit (56) enthält,
wobei die Ventilöffnungsgradsteuervorrichtung (50) zum Reduzieren der Ablassabgasströmung von Abgas zur Gasturbine (14) durch Steuern des Gasturbinensteuerventils (28) in einer Richtung konfiguriert ist, in der der Ventilöffnungsgrad des Gasturbinensteuerventils (28) geschlossen ist, wenn die Leistungsverbrauchsmenge des Servomotors (46) eine voreingestellte Leistungsmenge erreicht und die Menge der erzeugten Leistung die Gesamtmenge der Leistungsverbrauchsmenge des Servomotors (46) und der erforderlichen Leistungsmenge der Schiffsausrüstung übersteigt.

2. Schiffsantriebsvorrichtung nach Anspruch 1,
wobei die Ventilöffnungsgradsteuervorrichtung (50) zum Reduzieren der Ablassabgasströmung von Abgas zur Gasturbine (14) konfiguriert ist, sodass, wenn die Menge von erzeugter Leistung die Gesamtmenge der Leistungsverbrauchsmenge des Servomotors (46) und der erforderlichen Leistungsmenge übersteigt, die Gesamtmenge und die Menge von erzeugter Leistung gleich werden.

3. Schiff (1), umfassend die Schiffsantriebsvorrichtung (10) nach einem der Ansprüche 1 oder 2.

4. Schiffsantriebsverfahren zum Ausführen eines Prozesses durch Nutzung der Schiffsantriebsvorrichtung nach einem der Ansprüche 1 oder 2, das Verfahren umfassend:
einen Prozess des Antreibens einer Antriebsschraube durch Antreiben eines Hauptmotors (12);
einen Prozess des Antreibens einer Gasturbine (14) mit Abgas von dem Hauptmotor zum Erzeugen von Leistung; und
einen Prozess des Unterstützens des Antriebs des Schiffs (1),
wobei der Antrieb des Schiffs abhängig von einer überschüssigen Leistungsmenge, welche die Differenz zwischen einer Leistungsmenge von erzeugter Leistung und einer erforderlichen bordseitigen Leistungsmenge ist, unterstützt wird und die Ablassabgasströmung von Abgas zur Gasturbine (14) reduziert wird, wenn die Leistungsmenge, die durch das Unterstützen verbraucht wird, eine vorbestimmte Leistungsmenge erreicht und die Menge von erzeugter Leistung die Gesamtmenge der Leistungsverbrauchsmenge und der erforderlichen bordseitigen Leistungsmenge übersteigt.

## Revendications

1. Dispositif de propulsion de navire (10) comprenant :
un moteur principal (12) qui est équipé d'un compresseur de suralimentation (22) et configuré pour entraîner une hélice de propulsion (29) d'un navire (1) ;
une turbine à gaz (14) qui est configurée pour être entraînée par des gaz d'échappement du moteur principal (12) ;
une génératrice à turbine (20) qui est configurée pour être entraînée par la turbine à gaz (14) ; et
un moteur d'assistance (46) qui est configuré pour assister la propulsion du navire et est configuré pour être entraîné en fonction d'une quantité d'énergie en excès qui est la différence entre la quantité d'énergie produite par la génératrice à turbine (20) et la quantité d'énergie requise par l'équipement de navire (44),
une vanne de commande de turbine à gaz (28) qui est configurée pour commander un flux d'air de prélèvement des gaz d'échappement vers la turbine à gaz (14) des gaz d'échappement du moteur principal et pour être entièrement ouverte sauf si la pression de balayage du moteur principal (12) chute plus que nécessaire ; et
un dispositif de commande de degré d'ouverture de vanne (50) qui est configuré pour commander un degré d'ouverture de vanne de la vanne de commande de turbine à gaz (28), le dispositif de commande de degré d'ouverture de vanne (50) incluant une unité de totalisation (52), une unité de comparaison (54), et une unité de calcul de degré d'ouverture de vanne (56),
dans lequel le dispositif de commande de degré d'ouverture de vanne (50) est configuré pour réduire ledit flux d'air de prélèvement des gaz d'échappement vers la turbine à gaz (14) en commandant la vanne de commande de turbine à gaz (28) dans une direction dans laquelle le degré d'ouverture de vanne de la vanne de commande de turbine à gaz (28) est fermé, quand la quantité de consommation d'énergie du moteur d'assistance (46) parvient à une quantité d'énergie préétablie et que la quantité de ladite énergie produite dépasse le total de ladite quantité de consommation d'énergie du moteur d'assistance (46) et de ladite quantité d'énergie requise de l'équipement de navire.

2. Dispositif de propulsion de navire selon la revendication 1,
dans lequel le dispositif de commande de degré d'ouverture de vanne (50) est configuré pour réduire le flux d'air de prélèvement des gaz d'échappement vers la turbine à gaz (14) de sorte que, lorsque la quantité d'énergie produite dépasse le total de la quantité de consommation d'énergie du moteur d'assistance (46) et de la quantité d'énergie requise, le total et la quantité d'énergie produite deviennent égaux l'un à l'autre.

3. Navire (1) comprenant le dispositif de propulsion de navire (10) selon la revendication 1 ou 2.

4. Procédé de propulsion de navire pour réaliser un processus en utilisant le dispositif de propulsion de navire selon l'une quelconque des revendications 1 et 2, le procédé comprenant :
un processus d'entraînement d'une hélice de propulsion par l'entraînement d'un moteur principal (12) ;
un processus d'entraînement d'une turbine à gaz (14) avec des gaz d'échappement du moteur principal pour produire de l'énergie ; et
un processus d'assistance de la propulsion du navire (1),
dans lequel la propulsion du navire est assistée selon une quantité d'énergie en excès qui est la différence entre une quantité d'énergie produite et une quantité d'énergie embarquée requise, et le flux d'air de prélèvement des gaz d'échappement vers la turbine à gaz (14) est réduit lorsque la quantité d'énergie consommée par l'assistance parvient à une quantité d'énergie prédéterminée et que la quantité d'énergie produite dépasse le total de la quantité de consommation d'énergie et de la quantité d'énergie embarquée requise.
